# EUROPEAN PATENT APPLICATION

(11) **EP 2 840 851 A1**
(43) Date of publication of application: **25.02.2015**
(21) Application number: 14180115.9
(22) Date of filing: 07.08.2014
(51) Int. Cl.: H04W 72/04

(54) **UL-DL Interference Management for TDD eIMTA**

(30) Priority: 21.08.2013 US 201361868215 P
(71) Applicant: Nokia Corporation, 02610 Espoo (FI)
(72) Inventor: Lei, Haipeng, 100028 Beijing (CN); Yao, Chun Hai, Beijing (CN)
(74) Representative: Nokia Corporation

(57) **Abstract**

Uplink-downlink (UL-DL) interference management may benefit various communication systems, such as communication systems of the third generation partnership project (3GPP) long term evolution advanced (LTE-Advanced) release 12 (Rel-12). More specifically, certain methods and apparatuses may provide LTE time division duplex (TDD) enhancement for DL-UL Interference Management and Traffic Adaptation (TDD eIMTA). A method can include determining whether to activate or deactivate TDD eIMTA, or other dynamic TDD, in a cell. The method can also include informing at least one neighbor cell regarding a decision to activate or deactivate TDD eIMTA or other dynamic TDD.

## Description

### BACKGROUND:

### Field:

Uplink-downlink (UL-DL) interference management may benefit various communication systems, such as communication systems of the third generation partnership project (3GPP) long term evolution advanced (LTE-Advanced) release 12 (Rel-12). More specifically, certain methods and apparatuses may provide LTE time division duplex (TDD) enhancement for DL-UL Interference Management and Traffic Adaptation (TDD eIMTA).

### Description of the Related Art:

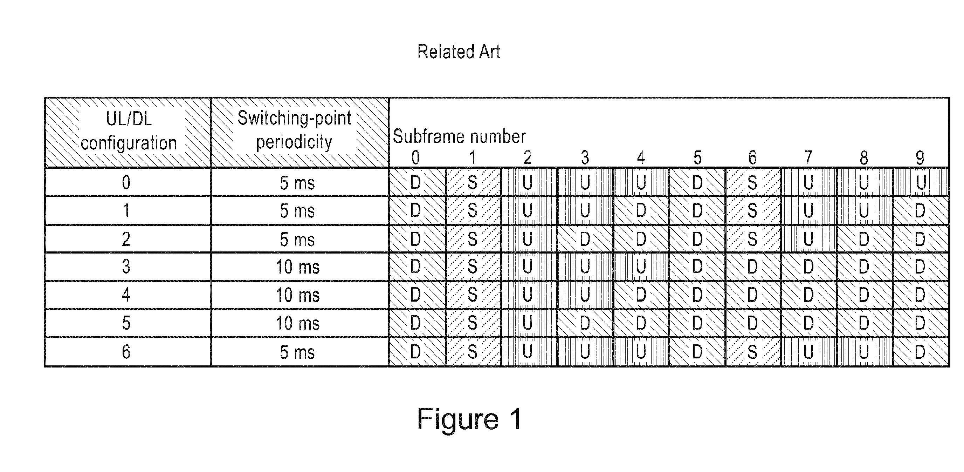

Currently, LTE TDD allows for asymmetric UL-DL allocations by providing seven different semi-statically configured TDD UL-DL configurations shown in Figure 1. These allocations can provide between 40% and 90% DL subframes. The current mechanism for adapting UL-DL allocation is based on a system information change procedure with a 640ms period. The concrete TDD UL/DL configuration is semi-statically informed by SIB-1 signaling.

TDD eIMTA is a feature for LTE Rel-12 or beyond. The purpose of TDD eIMTA is to realize traffic adaptation to match uplink and downlink traffic variation. While there may be various interference coordination mechanisms, there is currently no mechanism for properly managing UL-DL interference that may be caused by activation of TDD eIMTA.

For example, while many interference mitigation schemes may be known, the typical precondition of such schemes is that the neighboring cell already knows the interference source. For example, one method is to use eNB-to-eNB measurement, in which the eNB always measures the flexible subframes of neighboring cells. If the transmission direction of neighboring cell is changed frequently, then this eNB is aware that its neighboring cell has activated TDD eIMTA mode.

### SUMMARY:

According to one example embodiment, a method can include determining whether to activate or deactivate a dynamic time division duplex uplink downlink reconfiguration in a cell. The method can also include informing at least one neighbor cell regarding a decision to activate or deactivate the dynamic time division duplex uplink downlink reconfiguration.

In a variation, the activation can be by a base station of the cell itself.

In variation, a base station of the cell can determine the cell's own uplink/downlink traffic variation. The decision of whether to activate or deactivate the dynamic time division duplex uplink downlink reconfiguration can be based on the traffic variation.

In variation, a base station of the cell can determine the cell's own number of attached legacy user equipment. The decision of whether to activate or deactivate the dynamic time division duplex uplink downlink reconfiguration can be based on the number of attached legacy user equipment.

In a variation, the informing the at least one neighbor cell is performed using X2 signaling.

In a variation, the informing can include, when the decision is to activate the dynamic time division duplex uplink downlink reconfiguration, sending an information element that includes a dynamic uplink/downlink reconfiguration set and concrete validation timing.

In a variation, the informing can include, when the decision is to activate the dynamic time division duplex uplink downlink reconfiguration, sending an information element that includes a downlink reconfiguration configuration and concrete validation timing.

In a variation, the informing can include, when the decision is to deactivate the dynamic time division duplex uplink downlink reconfiguration, sending an information element that includes timing information and the TDD UL/DL configuration to be used in fixed TDD mode.

In a variation, the informing includes distinguishing between activation and deactivation by one bit with a Boolean value.

According to another embodiment, a method can include receiving a signal indicating activation or deactivation of dynamic time division duplex uplink downlink reconfiguration. The method can also include adjusting uplink-downlink interference mitigation based on the signal.

In a variation, the method can include, when the signal indicates activation of dynamic time division duplex uplink downlink reconfiguration, request formation of a cell cluster within the cell, boost uplink transmission power in flexible subframes, or reduce downlink transmission power in flexible subframes.

In a variation, the method can include, when the signal indicates deactivation of dynamic time division duplex uplink downlink reconfiguration, de-forming a cell cluster, resume using normal uplink transmission power adjustment or downlink transmission power, or falling back to fixed time division duplex mode and using a same uplink-downlink configuration.

According to another embodiment, a method can include deciding whether to activate or deactivate a dynamic time division duplex uplink downlink reconfiguration in a cell. The method can also include sending a request to a central node.

In variant, the central node includes one of an overlaid Macro eNB, a selected small cell eNB, or an operations and maintenance server.

In variant, the method further includes receiving a command from the central node to perform the dynamic time division duplex transmission. The method can also include performing the dynamic time division duplex uplink downlink reconfiguration in the cell.

In a variation, the request can be signaled using backhaul signaling.

In a variation, the command can be signaled using backhaul signaling.

According to another embodiment, a method can include receiving a request to activate or deactivate a dynamic time division duplex uplink downlink reconfiguration in a cell. The method can also include providing a command responsive to the request, either requiring or forbidding activation or deactivation of the dynamic time division duplex uplink downlink reconfiguration.

In a variation, the command can be signaled using backhaul signaling.

In variation, the backhaul signaling can include at least one of a coupling loss threshold for cell clustering, a reporting period of uplink-downlink traffic status, a cluster identifier, a dynamic uplink/downlink reconfiguration set, and a validation timing.

According to another embodiment, an apparatus can include at least one processor and at least one memory including computer program code. The at least one memory and the computer program code can be configured to, with the at least one processor, cause the apparatus at least to perform the method according to a respective method of any embodiments in any of their variations.

According to another embodiment an apparatus can include means for causing performance of a method according to any one of above methods.

According to another embodiment, a computer program product can include encoding of instructions for performing any one of above methods.

One or more of the embodiments recited above and/or in the accompanying claims may be suitably combined with each other in any manner apparent to one of ordinary skill in the art.

### BRIEF DESCRIPTION OF THE DRAWINGS:

For proper understanding of the invention, reference should be made to the accompanying drawings, wherein:
Figure 1 illustrates the seven current kinds of TDD UL/DL configurations.

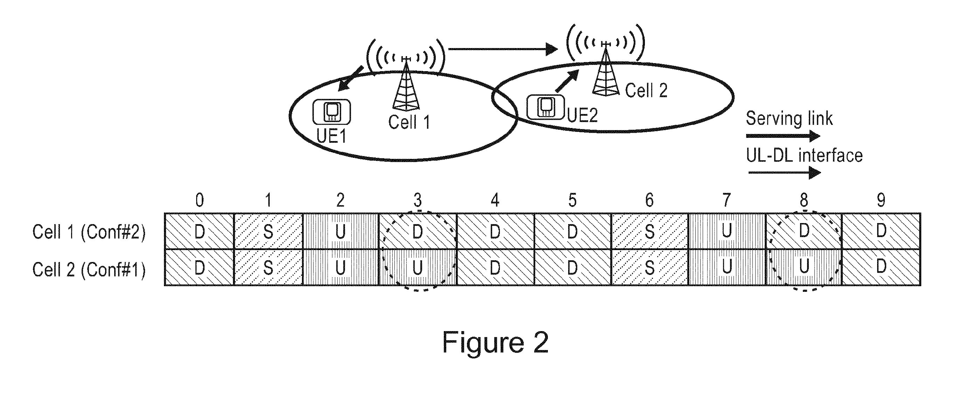

Figure 2 illustrates the caused UL-DL interference between neighboring cells
Figure 3 illustrates an eNB configuration update.
Figure 4 illustrates a case in which TDD eIMTA in a small cell can be activated by the small cell itself, according to certain embodiments.
Figure 5 illustrates a case in which TDD eIMTA in a small cell can be activated by a central node, according to certain embodiments.
Figures 6A-6B illustrate Table 1, which shows a first served cell information IE.
Figures 7A-7B illustrate Table 2, which shows a second served cell information IE.
Figures 8A-8B illustrate Table 3, which shows a third served cell information IE.
Figure 9 illustrates a system according to certain embodiments.

### DETAILED DESCRIPTION:

When one cell activates dynamic TDD mode and its neighboring cell is in fixed TDD mode then severe UL-DL interference can occur. There are a variety of reasons that the neighboring cell may be in a fixed TDD mode. For example, the neighboring cell may not activate TDD eIMTA or the neighboring cell may be a legacy base station (BS). Certain embodiments can manage this kind of interference and avoid system performance loss.

For example, certain embodiments can provide backhaul signaling to manage the UL-DL interference caused by the activation of TDD eIMTA.

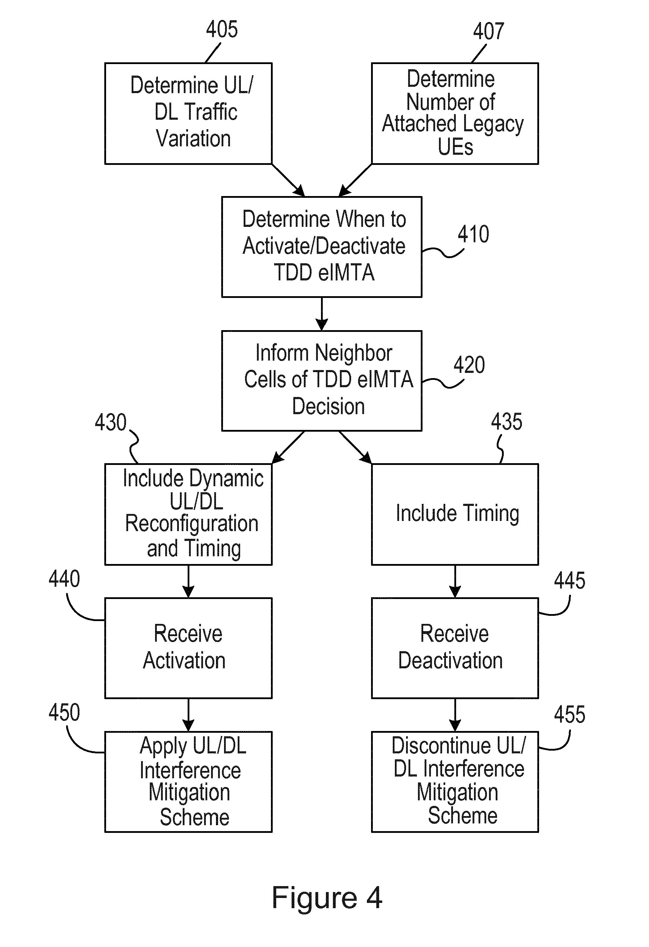

Figure 4 illustrates a case in which TDD eIMTA in a small cell can be activated by the small cell itself, according to certain embodiments. As shown in Figure 4, each small cell eNB can, at 405, determine its own UL/DL traffic variation. Moreover, each small cell eNB can, at 407, determine its own number of attached legacy UEs. At 410, each small cell eNB can determine when to activate/deactivate the feature based on its own UL/DL traffic variation and the number of attached legacy UEs.

After it decides to activate/deactivate TDD eIMTA feature, the eNB can, at 420, inform its decision to its neighboring cells. For example, a small cell eNB can inform its TDD eIMTA activating/deactivating decision to its neighboring cells via X2 signaling.

When the small cell eNB is activating the TDD eIMTA feature, the eNB can, at 430, configure the information element (IE) to include the dynamic UL/DL reconfiguration set and concrete validation timing. Alternatively, this information element (IE) can include the DL reference configuration and the concrete validation timing. When the small cell eNB is deactivating the TDD eIMTA feature, the eNB can, at 435, configure the IE to include the timing information and the TDD UL/DL configuration to be used in fixed TDD mode. The activation/deactivation can be distinguished by one bit with a Boolean value.

Upon receiving a signaling indicating activation at 440, the neighboring cell can use some UL-DL interference mitigation scheme(s) at 450. For example, the neighboring cell can request to form a cell cluster with the cell, boost UL transmission power in flexible subframes, or reduce DL transmission power in flexible subframes. Additionally, the neighboring cell can avoid DL transmission in the subframes which may be used for physical uplink control channel (PUCCH) transmission in the sending cell. Other mitigation schemes are also permitted.

Upon receiving a signal indicating deactivation at 445, the neighboring cell can stop the UL-DL interference mitigation schemes at 455. For example, the cell cluster can be deformed, normal UL transmission power adjustment or DL transmission power can be used, or the cell can fall back to fixed TDD mode and use the same UL-DL configuration. It is not mandatory that the neighboring cell take these steps. For example, if the neighboring cell predicts that TDD eIMTA will soon be reactivated, it may continue applying the UL/DL interference mitigation scheme(s).

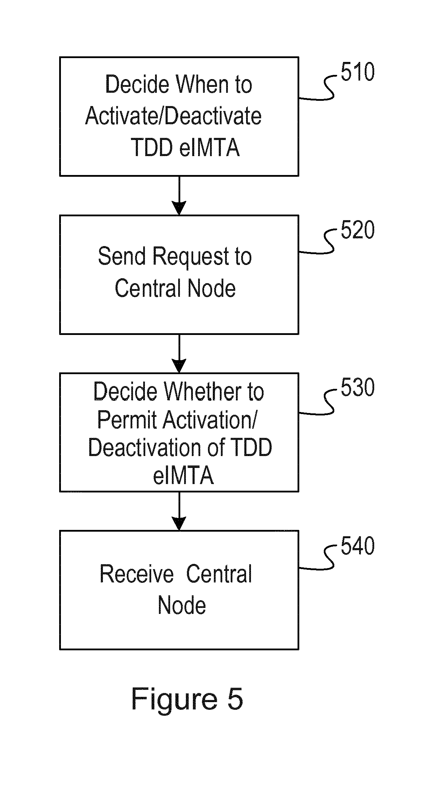

Figure 5 illustrates a case in which TDD eIMTA in a small cell can be activated by a central node, according to certain embodiments. This central node could be the overlaid Macro eNB, one selected small cell eNB or operations and maintenance (OAM) server. The small cell eNB may decide, at 510, to activate/deactivate its TDD eIMTA feature. Thus, the small cell eNB can, at 520, send request signaling to the central node. The central node can, at 530, decide whether to permit it and small cell eNB can wait for the feedback signaling from the central node as below:

The request from the small cell eNB to the central node, at 520, can performed using backhaul signaling that is transmitted from the small cell eNB to the central node in order to request TDD eIMTA activation/deactivation. Another backhaul signaling can be used from the central node to the small cell eNB to activate/deactivate TDD eIMTA of the small cell at 540.

For TDD eIMTA activation, the backhaul signaling can include the coupling loss threshold for cell clustering, reporting period of UL-DL traffic status (for example, UL-DL traffic ratio reporting period), cluster ID, dynamic UL/DL reconfiguration set, and validation timing. For TDD eIMTA deactivation, this backhaul signaling can include the validation timing and the TDD UL/DL configuration to be used in fixed TDD mode.

In this way, performance gain of dynamic TDD can be obtained while avoiding unnecessary UE power consumption or eNB power reduction.

The TDD eIMTA feature may mainly benefit low or medium traffic load cases. Thus, the TDD eIMTA feature could be frequently activated or deactivated. Neighboring cells can, therefore, know the feature status and can take into account the proper interference mitigation scheme according to the available information, such as dual loop power control, scheduling limitation.

As mentioned above, if the TDD eIMTA feature in small cell can be activated/deactivated by the small cell itself, then each small cell eNB can determine when to activate/deactivate the feature based on its own UL/DL traffic variation and the number of attached legacy UEs. Other criteria can also be used.

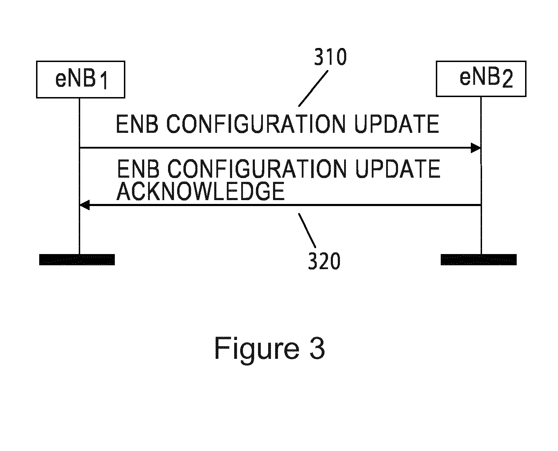

One example is shown in Figure 3. For example, as shown in Figure 3, if small cell eNB₁ decides to activate its own eIMTA feature, it can send the eIMTA activating information at 310 to its neighboring small cell eNB₂. Here and elsewhere in this discussion eIMTA is provided as one example of a dynamic time division duplex transmission, such as TDD transmission with dynamic UL/DL configuration. The same approaches may also be applied to other examples of dynamic time division duplex transmission. Dynamic TDD can refer to a case in which a cell can dynamically select the TDD UL/DL configuration with the most appropriate UL-DL resource ratio for the purpose of matching the instantaneous UL and DL traffic variation. Thus, any of the configurations in Figure 1 may be used. For fixed TDD, by contrast, the cell always adopts only one UL/DL configuration irrespective of instantaneous UL and DL traffic variation. Thus, activation of TDD eIMTA can be one example of activation of dynamic TDD, for example, for one small cell. Moreover, deactivation of TDD eIMTA can refer to reverting to fixed TDD for that same small cell.

As shown in Figure 3, the neighboring small cell eNB₂ can acknowledge this information at 320. The information includes dynamic UL/DL reconfiguration set and validation timing. With the knowledge of dynamic UL/DL reconfiguration set, the neighboring cell can know the subframe type, for example, which subframe is fixed or flexible or which subframe is conflicting or non-conflicting. Thus, the neighboring cell can boost UL transmission power or request the aggressor cell to reduce DL transmission power in the flexible/conflicting subframe to combat the suffered UL-DL interference. Alternatively, this information element (IE) can include the DL reference configuration and the concrete validation timing. The DL reference configuration can be used to derive the uplink subframes for PUCCH transmission. Such a request to the aggressor cell can be combined with the acknowledgement of the eNB configuration update.

With this information, eNB₂ can take measures to reduce the interference or protect the PUCCH transmission of eNB₁. TDD eIMTA activating information can be transmitted in the signaling "eNB configuration update" and an IE can be included in "Served Cell Information IE" in Table 1.

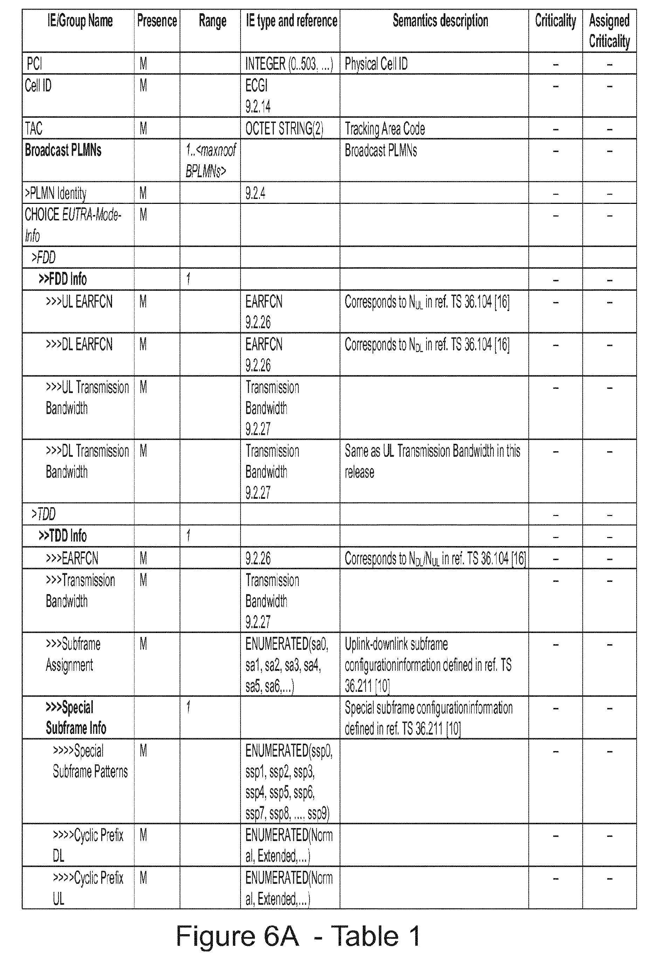

Figures 6A-6B illustrate Table 1, which shows a first served cell information IE. Based on the above analysis, one example new IE is shown in Table 1. This new IE can indicate TDD eIMTA activating, including the dynamic UL/DL reconfiguration set or DL reference configuration in 3GPP technical specification (TS) 36.423. This signaling can be transmitted from small cell eNB 1 to small cell eNB2 via X2 interface. This IE can contain cell configuration information of a cell that a neighbor eNB may need for the X2 AP interface.

On the other hand, if dynamic TDD feature in small cell is activated by a central node, then a new backhaul signaling can be transmitted from small cell eNB to the central node in order to request eIMTA activating. The central node could be the overlaid Macro eNB, one selected small cell eNB or OAM. Another backhaul signaling may be needed from the central node to the small cell eNB to activate/deactivate eIMTA of this small cell taking into consideration interference management. For eIMTA activating, this backhaul signaling can include the coupling loss threshold for cell cluster forming, UL-DL traffic ratio reporting period, cluster ID, UL-DL reconfiguration set and validation timing.

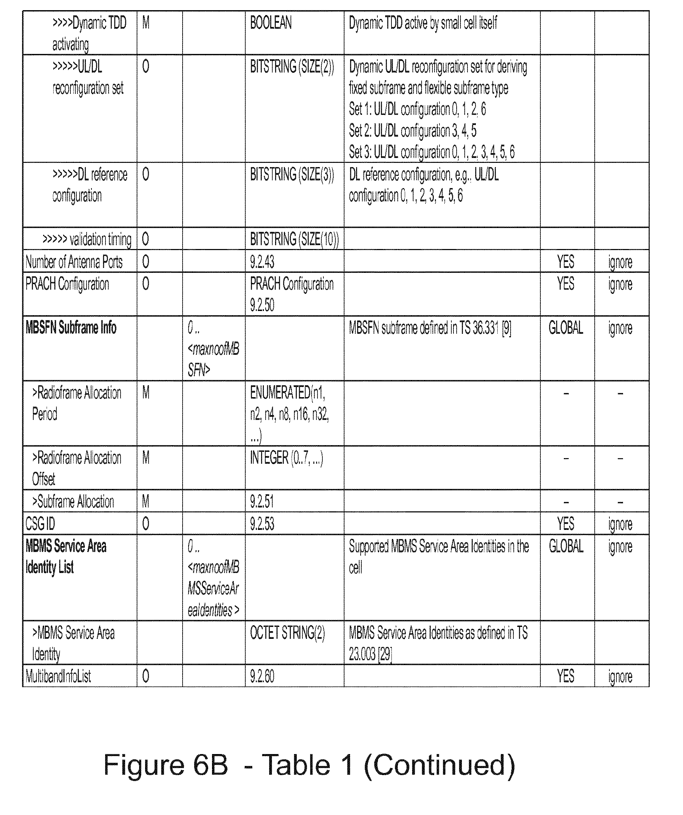

As shown in Figure 6B, the UL/DL reconfiguration set can be selected for deriving fixed subframe and flexible subframe type. For example, the sets can be as follows: set 1 can be UL/DL configurations 0, 1, 2, and 6; set 2 can be UL/DL configurations 3, 4, and 5; and set 3 can be UL/DL configuration 0, 1, 2, 3, 4, 5, and 6. This dynamic reconfiguration set can mean that the adaptive UL/DL configuration can only be selected from the reconfiguration set. For example, if set 1 is used, then adaptive UL/DL configuration can only be selected from one of configurations 0, 1, 2, and 6. By contrast, if set 2 is selected, then adaptive UL/DL configuration can be chosen from one of configurations 3, 4, and 5. The selected sets are examples. Other sets can be formed.

Based on the indicated reconfiguration set, the receiving eNB can know which is subframe is fixed or flexible in the cell of sending eNB served. For example, if set 1 is used in the sending cell, then the sending cell can only select the configuration 0, 1, 2, or 6. So subframes 0, 1, 2, 5, 6, and 7 are, in this case, fixed subframes, while subframes 3, 4, 8, and 9 are flexible subframes. If set 2 is used in the sending cell, then the sending cell can only select configuration 3, 4, or 5. So, in this example, subframes 0, 1, 2, 5, 6, 7, 8 and 9 are fixed subframes, while subframes 3 and 4 are flexible subframes. If set 3 is used in the sending cell, then the sending cell can select all seven existing configurations. Thus, in this case, subframes 0, 1, 2, 5, 6 are fixed subframes, while subframes 3, 4, 7, 8 and 9 are flexible subframes.

Furthermore, PUCCH transmission may suffer severe interference from a neighboring cell's downlink transmission. Thus, the information element (IE) can include the DL reference configuration. Based on the indicated DL reference configuration, the receiving eNB can derive which uplink subframes shall be used for PUCCH transmission in the sending eNB. Then the receiving cell can protect the PUCCH of sending cell by avoiding DL transmission or using the same transmission direction in the subframes which may be used for PUCCH transmission in the sending cell.

UL-DL interference of the kind being considered may happen only in flexible subframes. Based on the indicated reconfiguration set, the receiving eNB can know the flexible subframe location and adopt UL-DL interference mitigation schemes only in these flexible subframes.

The cluster ID field can be used for a cell clustering interference mitigation scheme. In this case, all the pico cells within the same cluster can use the same UL-DL configuration. This cluster ID can be the label of the formed cluster.

The validation timing field can be the concrete system frame number (SFN) to start activating/deactivating eIMTA.

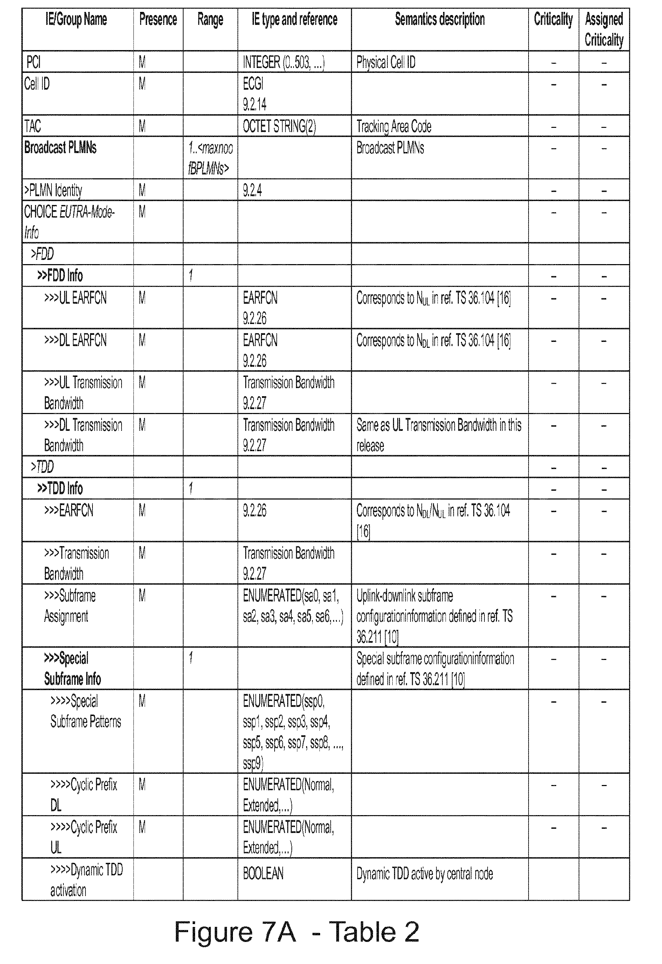

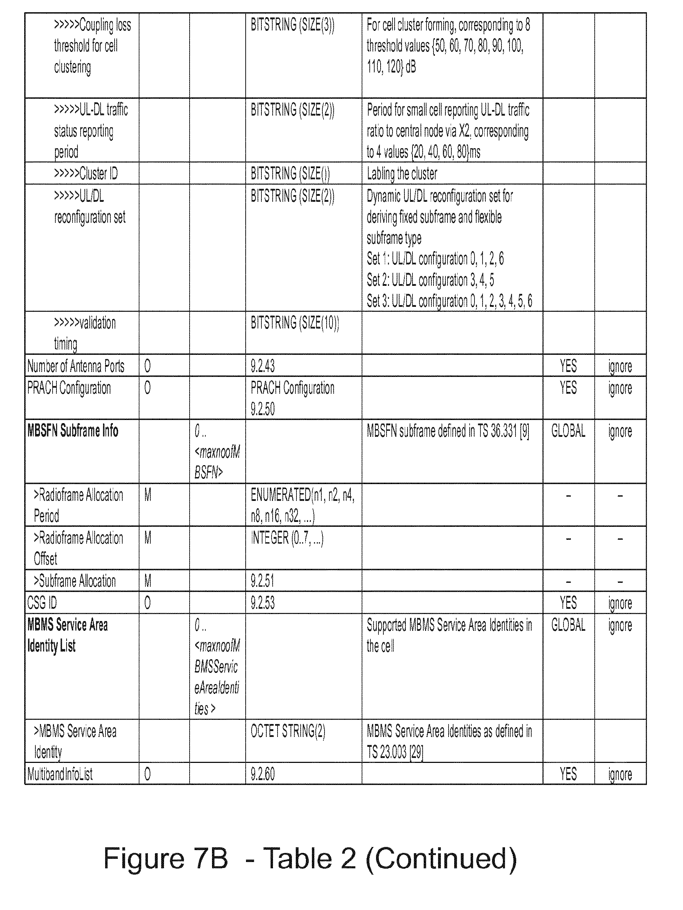

Figures 7A-7B illustrate Table 2, which shows a second served cell information IE. Based on the above analysis, one example new IE is shown in Table 2. The new IE can capture the activation of TDD eIMTA by a central node, including the coupling loss threshold, UL-DL traffic ratio reporting period, cluster ID, UL-DL reconfiguration set in 3GPP TS 36.423. This signaling can be transmitted from central node to a small cell eNB via an X2 interface.

This IE can contain cell configuration information of a cell that a neighbor eNB may need for the X2 AP interface. Table 2 may be just like Table 1 except that UL/DL reconfiguration set may have a bitstring size 3 instead of size 2. For eIMTA deactivating, this backhaul signaling can include the fixed UL/DL configuration and validation timing.

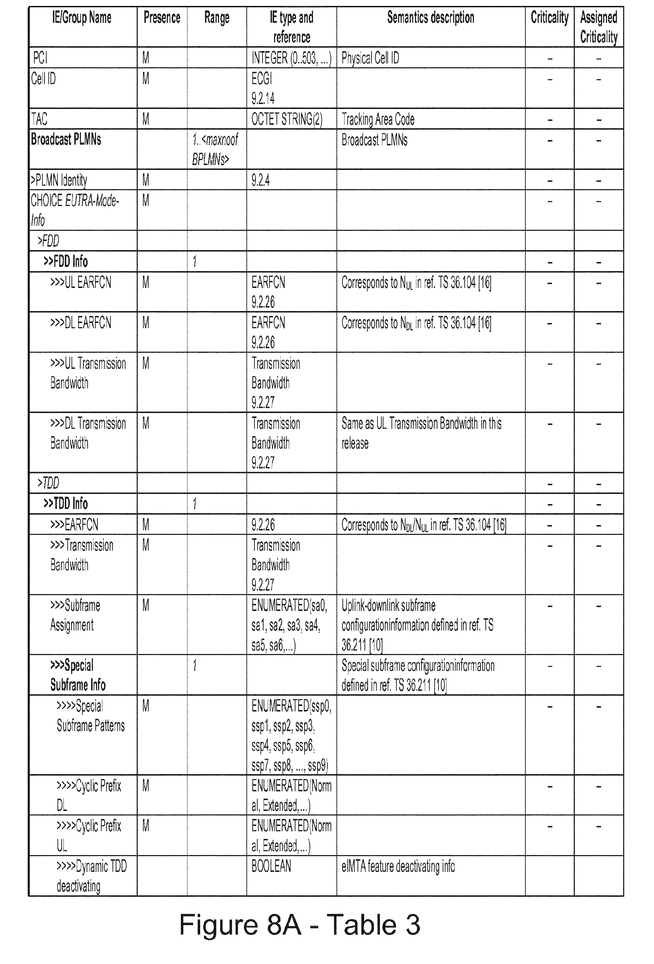

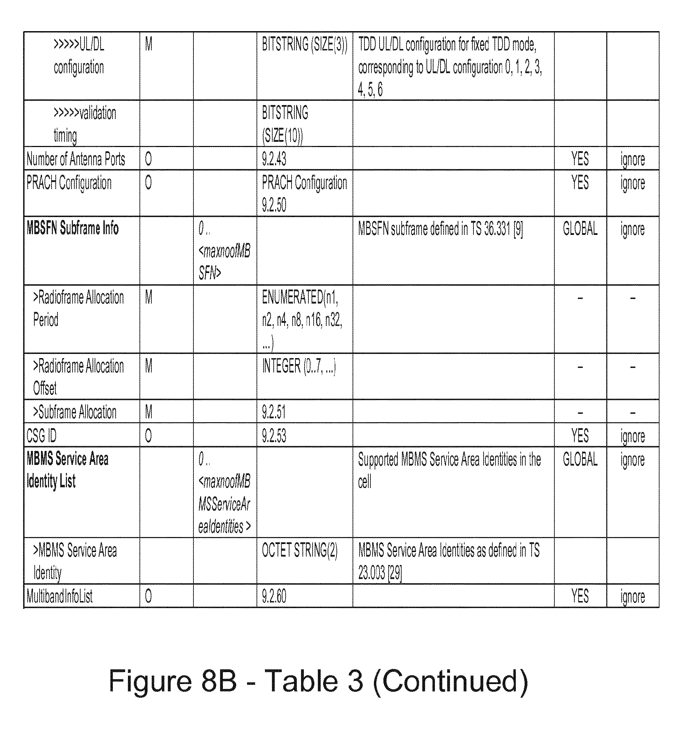

Figures 8A-8B illustrate Table 3, which shows a third served cell information IE. Based on the above analysis, one example new IE is shown in Table 3. The new IE can capture the deactivation of TDD eIMTA including the fixed TDD UL/DL configuration in 3GPP TS 36.423. This signaling can be transmitted from one eNB to another eNB via X2 interface. This IE can contain cell configuration information of a cell that a neighbor eNB may need for the X2 AP interface.

In certain embodiments, activation/deactivation informing, requesting and central node feedback signaling are one-shot signaling considering that the corresponding procedure does not need to be as frequently transmitted as UL/DL configuration exchange signaling. For the purpose of UL-DL interference mitigation, this UL/DL configuration info may need to be exchanged at least with a period of 40ms, considering the 20ms delay for X2 interface. In that sense, that activation/deactivation informing, requesting and central node feedback signaling can be considered separate signaling and not a subset of UL/DL configuration exchange signaling.

Certain embodiments may have various benefits or advantages. For example, in certain embodiments a neighboring cell can know eNB eIMTA status. Moreover, in certain embodiments, the interference can be easily managed, even though there may be some additional backhaul signaling.

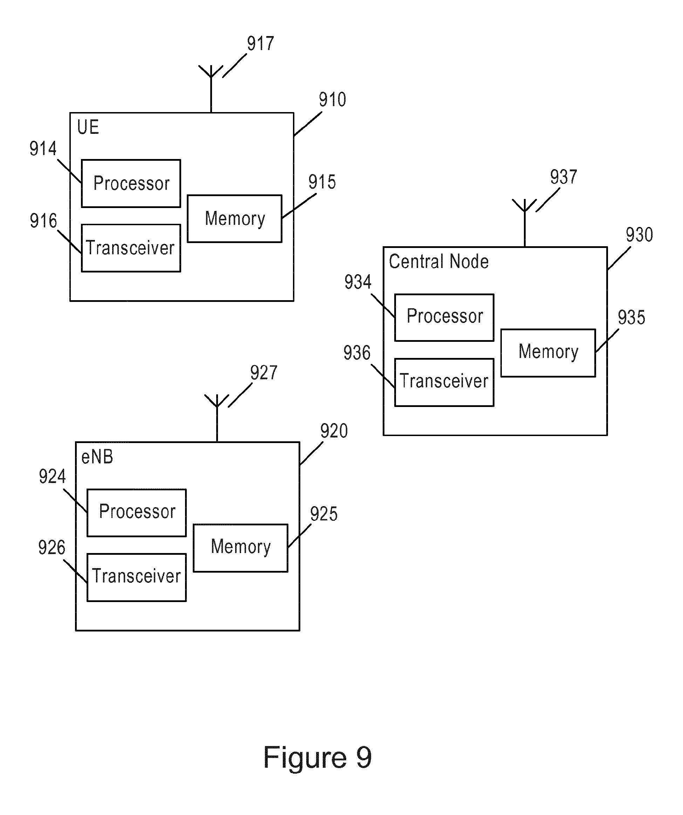

Figure 9 illustrates a system according to certain embodiments of the invention. In one embodiment, a system may include multiple devices, such as, for example, at least one UE 910, at least one eNB 920 or other base station or access point, and at least one central node 930. In certain systems, only UE 910 and eNB 920 may be present, and in other systems UE 910, eNB 920, and a plurality of other user equipment may be present. Other configurations are also possible. The central node 930 may include an overlaid macro eNB or OAM in addition to traditional core network elements.

Each of these devices may include at least one processor, respectively indicated as 914, 924, and 934. At least one memory can be provided in each device, and indicated as 915, 925, and 935, respectively. The memory may include computer program instructions or computer code contained therein. The processors 914, 924, and 934 and memories 915, 925, and 935, or a subset thereof, can be configured to provide means corresponding to the various blocks of Figures 4 and 5.

As shown in Figure 9, transceivers 916, 926, and 936 can be provided, and each device may also include an antenna, respectively illustrated as 917, 927, and 937. Other configurations of these devices, for example, may be provided. For example, central node 930 may be configured for wired communication, rather than wireless communication, and in such a case antenna 937 would illustrate any form of communication hardware, without requiring a conventional antenna.

Transceivers 916, 926, and 936 can each, independently, be a transmitter, a receiver, or both a transmitter and a receiver, or a unit or device that is configured both for transmission and reception.

Processors 914, 924, and 934 can be embodied by any computational or data processing device, such as a central processing unit (CPU), application specific integrated circuit (ASIC), or comparable device. The processors can be implemented as a single controller, or a plurality of controllers or processors.

Memories 915, 925, and 935 can independently be any suitable storage device, such as a non-transitory computer-readable medium. A hard disk drive (HDD), random access memory (RAM), flash memory, or other suitable memory can be used. The memories can be combined on a single integrated circuit as the processor, or may be separate from the one or more processors. Furthermore, the computer program instructions stored in the memory and which may be processed by the processors can be any suitable form of computer program code, for example, a compiled or interpreted computer program written in any suitable programming language.

The memory and the computer program instructions can be configured, with the processor for the particular device, to cause a hardware apparatus such as UE 910, eNB 920, and central node 930, to perform any of the processes described above (see, for example, Figures 3-5). Therefore, in certain embodiments, a non-transitory computer-readable medium can be encoded with computer instructions that, when executed in hardware, perform a process such as one of the processes described herein. Alternatively, certain embodiments of the invention can be performed entirely in hardware.

Furthermore, although Figure 9 illustrates a system including a UE, eNB, and central node, embodiments of the invention may be applicable to other configurations, and configurations involving additional elements.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the spirit and scope of the invention.

### GLOSSARY

- ASIC: Application Specific Integrated Circuit
- BS: Base Station
- CPU: Central Processing Unit
- DAI: Downlink Assignment Index
- DCI: Downlink Control Information
- DL: Downlink
- eIMTA: enhancement for DL-UL Interference Management and Traffic Adaptation
- eNB: evolved Node B
- GP: Guard Period
- IE: Information Element
- LTE: Long Term Evolution
- OAM: Operations and Maintenance
- PUCCH: Physical Uplink Control Channel
- RAM: Random Access Memory
- ROM: Read Only Memory
- RRC: Radio Resource Control
- SFN: System Frame Number
- TDD: Time Division Duplex
- TPC: Transmit Power Control
- UE: User Equipment
- UL: Uplink

## Claims

1. A method, comprising:
determining (405,407,410) whether to activate or deactivate a dynamic time division duplex uplink downlink reconfiguration in a cell; and
informing (420) at least one neighbor cell regarding a decision to activate or deactivate the dynamic time division duplex uplink downlink reconfiguration.

2. The method according to claim 1, wherein a base station of the cell determines (410) the cell's own uplink/downlink traffic variation, and wherein the decision of whether to activate or deactivate the dynamic time division duplex uplink downlink reconfiguration is based on the traffic variation.

3. The method according to claim 1, wherein a base station of the cell determines (407) the cell's own number of attached legacy user equipment, and wherein the decision of whether to activate or deactivate the dynamic time division duplex uplink downlink reconfiguration is based on the number of attached legacy user equipment.

4. The method of claim 1, wherein the informing (420) comprises, when the decision is to activate the dynamic time division duplex uplink downlink reconfiguration, sending an information element that includes at least one of:
a dynamic uplink/downlink reconfiguration set and concrete validation timing(430); and
a downlink reconfiguration configuration and concrete validation timing.

5. The method of claim 1, wherein the informing comprises, when the decision is to deactivate the dynamic time division duplex uplink downlink reconfiguration, sending an information element that includes timing information(435) and the TDD UL/DL configuration to be used in fixed TDD mode.

6. A method, comprising:
receiving(440,445) a signal indicating activation or deactivation of dynamic time division duplex uplink downlink reconfiguration; and
adjusting(450, 455) uplink-downlink interference mitigation based on the signal.

7. The method according to claim 6, further comprising:
when the signal indicates activation of dynamic time division duplex uplink downlink reconfiguration, requesting formation of a cell cluster within the cell, boost uplink transmission power in flexible subframes, or reduce downlink transmission power in flexible subframes.

8. The method according to claim 6, further comprising:
when the signal indicates deactivation of dynamic time division duplex uplink downlink reconfiguration, de-forming a cell cluster, resuming using normal uplink transmission power adjustment or downlink transmission power, or falling back to fixed time division duplex mode and using a same uplink-downlink configuration.

9. The method according to any of claims 6-8, further comprising:
deciding(510) whether to activate or deactivate a dynamic time division duplex uplink downlink reconfiguration in a cell; and
sending(520) a request to a central node.

10. The method according to claim 9, wherein the central node includes one of an overlaid Macro eNB, a selected small cell eNB, or an operations and maintenance server.

11. The method according to any of claims 6-10, further comprising:
receiving(540) a command from a central node to perform the dynamic time division duplex transmission; and
performing the dynamic time division duplex uplink downlink reconfiguration in the cell.

12. A method, comprising:
receiving(520) a request to activate or deactivate a dynamic time division duplex uplink downlink reconfiguration in a cell; and
providing(530) a command responsive to the request, either requiring or forbidding activation or deactivation of the dynamic time division duplex uplink downlink reconfiguration.

13. The method of claim 12, wherein the backhaul signaling comprises at least one of:
a coupling loss threshold for cell clustering;
a reporting period of uplink-downlink traffic status;
a cluster identifier;
a dynamic uplink/downlink reconfiguration set, and
a validation timing.

14. An apparatus, comprising means (914-916,924-926,934-936) for causing performance of a method according to any one of claims 1 to 13.

15. A computer program product encoding instructions for performing the method of any one of claims 1 to 13.
